# EUROPEAN PATENT SPECIFICATION

(11) **EP 1 873 022 B1**
(45) Date of publication and mention of the grant of the patent: **15.04.2009**
(21) Application number: 07111173.6
(22) Date of filing: 27.06.2007
(51) Int. Cl.: B60R 21/207

(54) **Occupant protection apparatus and method**
Verfahren und Vorrichtung zum Schutz der Insassen
Appareil et procédé de protection des occupants

(30) Priority: 30.06.2006 JP 2006181721
(43) Date of publication of application: 02.01.2008
(73) Proprietor: TOYODA GOSEI CO., LTD., Nishi-Kasugai-gun, Aichi-ken, 452-8564 (JP); Toyota Jidosha Kabushiki Kaisha, Toyota-shi, Aichi-ken, 471-8571 (JP)
(72) Inventor: Suzuki, Shigeyuki, c/o TOYODA GOSEI CO., LTD., Nishikasugai-gun, Aichi 452-8564 (JP); Oguchi, Shinji, c/o TOYODA GOSEI CO., LTD., Nishikasugai-gun, Aichi 452-8564 (JP); Kakumu, Michinori, Toyota-shi Aichi 471-8571 (JP); Mikutsu, Satoshi, Toyota-shi Aichi 471-8571 (JP)
(74) Representative: TBK-Patent

(56) References cited:
- EP-A- 1 792 771
- EP-A1- 1 422 104
- DE-A1- 4 008 243
- DE-A1-9102005 041 38
- DE-A1-7102005 059 99

## Description

### BACKGROUND OF THE INVENTION

The present invention relates to an apparatus and a method for protecting an occupant of a vehicle such as an automobile in a collision.

When an impact due to a collision is applied from front, the body of the occupant on the seat can move forward while sliding along the seat portion of the seat and through below the seat belt. This is known as a "submarine phenomenon."

Japanese Laid-Open Utility Model Publication No. 2-21134 discloses a technique in which an airbag is used for preventing such a phenomenon. A vehicle seat disclosed in the publication includes an embedded airbag that is inflated at the time of collision. When inflated, the airbag pushes up a part of a cushion member of the seat portion. The pushed up part in turn engages with the thighs of the seated occupant, thereby preventing the occupant from sliding forward.

European patent application EP 1 422 104 A1 (Preamble of claim 1) discloses an airbag similar to the above.

Document DE 40 08 243 A1 discloses an airbag in a seat cushion and a passenger detection. The airbag is intended to protect a passenger seated on a seat in a passenger compartment of a vehicle. The airbag is provided to the rear surface of the seat being located in front of the passenger to be protected. Further, the presence of a passenger on the respective seat is either detected by a load detector provided in the seat or by a buckle contact.

However, if the seated occupant is not using the seat belt, the cushion member can toss up the seated occupant when being pushed up at the time of collision. This is more likely to occur when the weight of the occupant is light. Also, if no occupant is seated and an article is placed on the seat instead, the article may be tossed up by the cushion member when the cushion member is pushed up at the time of collision.

### SUMMARY OF THE INVENTION

Accordingly, it is an objective of the present invention to provide an occupant protection apparatus and method that, when no occupant is seated and an article is placed on a seat, inhibit the inflation of a bag such as an airbag. Another objective of the present invention is to provide an occupant protection apparatus and method that, when a occupant seated on the seat is not restrained in the seat, inhibit the inflation of an airbag.

To achieve the foregoing objective and in accordance with a first aspect of the present invention, an apparatus according to claim 1 and a method according to claim 4 is provided.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a perspective view illustrating a vehicle seat in which an airbag apparatus according to a first comparative example is installed not belonging to the present invention;
Fig. 2A is a side cross-sectional view illustrating the seat of Fig. 1;
Fig. 2B is an enlarged view illustrating the airbag apparatus shown in Fig. 2A;
Fig. 3 is a perspective view illustrating the frame of the seat shown in Fig. 1;
Fig. 4 is a side cross-sectional view illustrating the seat shown in Fig. 1, when the airbag is inflated;
Fig. 5 is a block diagram showing the configuration of the airbag apparatus of the first comparative example not belonging to the invention;
Fig. 6 is a block diagram showing the configuration of an airbag apparatus according to a second comparative example not belonging to the present invention; and
Fig. 7 is a block diagram showing the configuration of an airbag apparatus according to an embodiment of the present invention.

### DETAILED DESCRIPTION OF THE PREFERRED EMBODIMENTS

### First comparative example

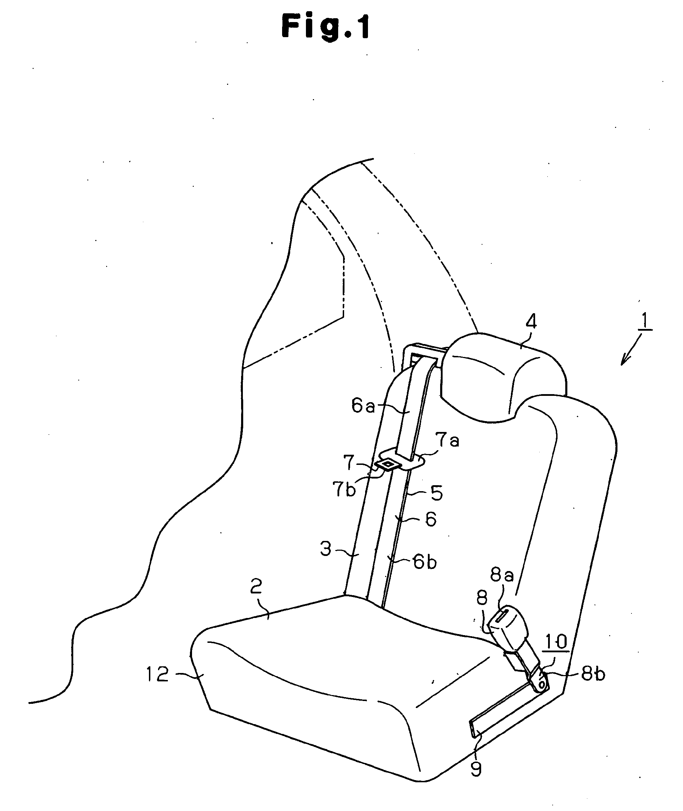

A first comparative example will now be described with reference to Figs. 1 to 5. In the following, the traveling direction of the vehicle is defined as a forward direction. With reference to the forward direction, front and rear, up and down, and left and right directions are defined. Regarding a vehicle seat, front and rear, up and down, and left and right directions are defined with reference to a state in which the seat is installed in the vehicle.

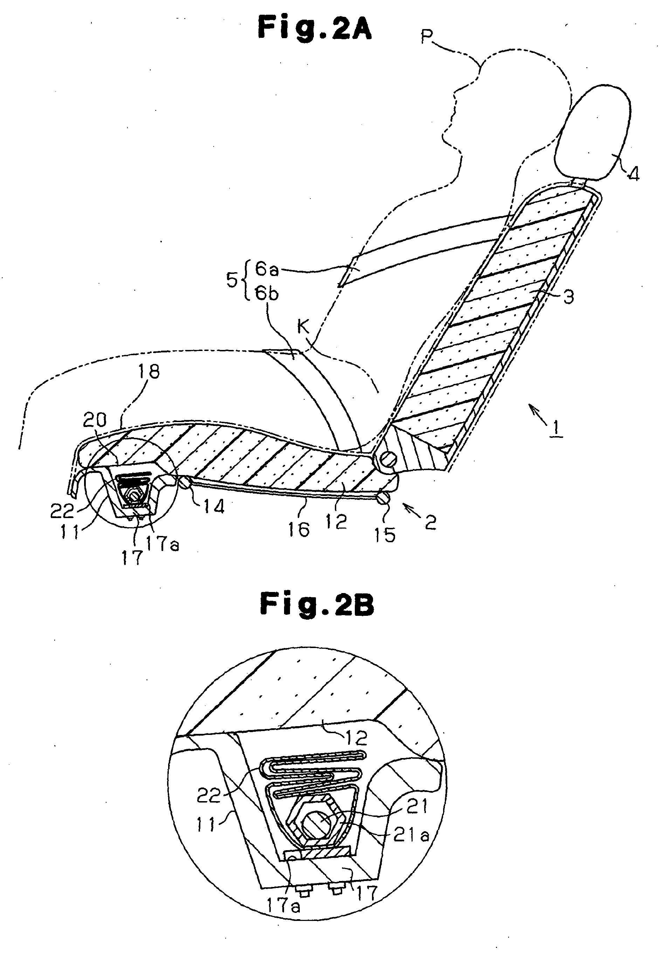

A vehicle seat 1 is located in a passenger compartment of a vehicle (not shown). As shown in Figs. 1 and 2A, the seat 1 includes a seat portion 2 supporting the buttocks and thighs of the occupant P seated on the seat 1, a reclining backrest portion 3, a headrest 4 for supporting the head of the seated occupant P, and a seat belt 5.

The seat belt 5 is a three-point seat belt and functions as a restrainer (restraining means) that restrains the occupant P seated on the seat 1 to the seat 1. Specifically, the seat belt 5 includes a webbing 6, a tongue 7 attached to the webbing 6 to be movable along the longitudinal direction of the webbing 6, and buckle device 10 provided on a side of the seat 1. One end of the webbing 6 is fixed to the side of the seat 1 at which the buckle device 10 is not provided. The other end of the webbing 6 is wound by a seat belt retractor (not shown). The tongue 7 includes a sliding portion 7a and an engaging portion 7b. The tongue 7 is engaged with a buckle 8 of the buckle device 10 at the engaging portion 7b. The sliding portion 7a allows the webbing 6 to pass therethrough so that the tongue 7 slides on the webbing 6 at the sliding portion 7a.

This configuration allows the occupant P to adjust the length of the webbing 6 that is drawn out of the seat belt retractor as necessary. The occupant P can slide the tongue 7 on the webbing 6 to adjust the length of a lap belt portion 6b of the webbing 6, which restrains the lumbar region of the occupant P, and a shoulder belt portion 6a of the webbing 6, which restrains the shoulder region of the occupant P. The lap belt portion 6b refers to a portion of the webbing 6 that extends from the end of the webbing fixed to the side of the seat 1 to the tongue 7, and the shoulder belt portion 6a refers to a portion of the webbing 6 that extends from the tongue 7 to the seat belt retractor.

The buckle device 10 includes the box-like buckle 8 and a retainer 9 fixed to a side of the seat 1. The buckle 8 has an insertion opening 8a that allows insertion of the engaging portion 7b of the tongue 7. The buckle 8 is pivotably coupled to the retainer 9 at a coupling portion 8b provided at a position away from the insertion opening 8a. The buckle 8 is thus pivotable relative to the seat 1.

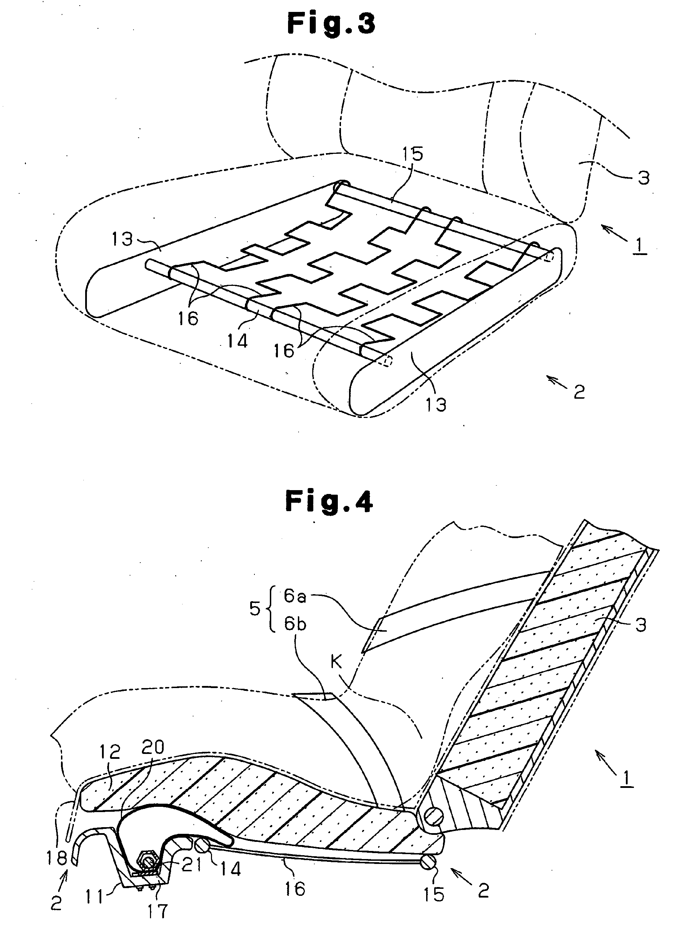

As shown in Fig. 2A, the seat portion 2 includes a frame 11 and a cushion body 12 located on the frame 11. As shown in Fig. 3, the frame 11 includes a pair of left and right support plates 13. The support plates 13 have a shape elongated along the front and rear direction. A front rod 14 and a rear rod 15, which extend along the vehicle width (along the left and right direction), bridge over the support plates 13. S springs 16 for supporting the cushion body 12 are suspended between the front rod 14 and the rear rod 15.

In a front portion of the space between the support plates 13, a seat pan 17 shown in Fig. 2A is provided. The seat pan 17 has an accommodation recess 17a extending along the vehicle width. An airbag apparatus 20 serving as an occupant protection apparatus is accommodated in the accommodation recess 17a. The airbag apparatus 20 will be discussed below. The seat portion 2 is covered with a cover 18 made of cloth or leather.

As shown in Fig. 2B, the airbag apparatus 20 includes an inflator 21 serving as a gas generator and an inflatable airbag 22 made of cloth. The inflator 21 is shaped like a cylindrical column and is accommodated in a cylindrical case 21a while being wrapped with the airbag 22, such that the axis of the inflator 21 extends along the width of the vehicle.

The airbag 22, as shown in Fig. 4, is deployed and inflated between the cushion body 12 and the frame 11 (more specifically, between the cushion body 12 and the S springs 16), so as to expand over a portion (in this embodiment, a half) of the area of the seat portion 2 that contacts the thighs and the buttocks of the occupant P seated on the seat 1. Prior to inflation, that is, when accommodated in the accommodation recess 17a, the airbag 22 is compactly folded. Specifically, a portion of the airbag 22 that is above the inflator 21 is folded in a bellows like manner, such that most part of the airbag 22 is deployed rearward when inflated.

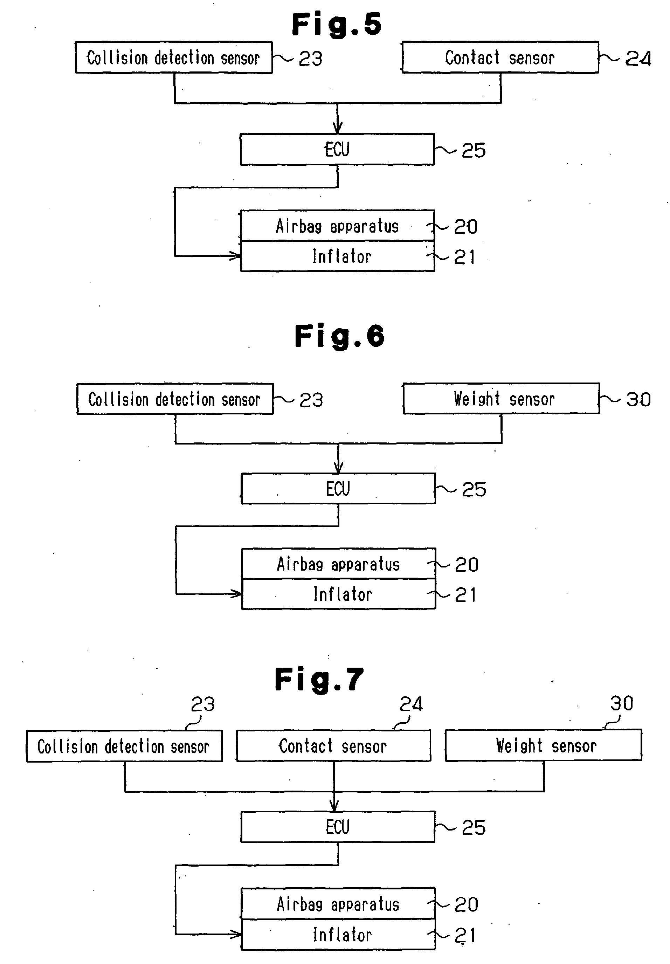

As shown in Fig. 5, the airbag apparatus 20 includes a collision detection sensor 23 serving as a collision detection section (collision detection means) that detects a collision of the vehicle and a contact sensor 24 that senses whether the tongue 7 is in contact with (that is, engaged with) the buckle 8. Instead of the collision detection sensor 23, an abnormal acceleration detection sensor serving as an abnormal acceleration detection section (abnormal acceleration detection means) that detects an abnormal acceleration may be used. The airbag apparatus 20 further includes an electronic control unit (ECU) 25 serving as a control section (control means) that controls the inflation of the airbag 22. The collision detection sensor 23 is connected to the ECU 25, and sends a collision signal to the ECU 25 when detecting a collision of the vehicle. The contact sensor 24 is also connected to the ECU 25, and sends a sensing signal to the ECU 25 when sensing that the tongue 7 is engaged with the buckle 8, or that the seat belt 5 is being used. The inflator 21 is also connected to the ECU 25. The operation of the inflator 21 is controlled through signals sent from the ECU 25.

The operation of the airbag apparatus 20 will now be described.

When receiving a collision signal from the collision detection sensor 23, the ECU 25 determines whether the ECU 25 has received a sensing signal from the contact sensor 24. If the outcome of the determination is positive, that is, if a sensing signal from the contact sensor 24 has been received by the ECU 25, the ECU 25 outputs a control signal to activate the inflator 21 to the inflator 21. This activates the inflator 21 to send high pressure gas to the airbag 22. The gas in turn deploys and inflates the airbag 22. That is, if the ECU 25 has received a sensing signal from the contact sensor 24, the ECU 25 determines that an occupant P is seated on the seat 1 while using the seat belt 5. The ECU 25 then permits the airbag 22 to be inflated.

When the airbag 22 is thus inflated, the front half of the cushion body 12 is mainly pushed upward as shown in Fig. 4. As a result, the lumbar region K of the occupant P on the seat 1 is moved upward so as to be pressed against the lap belt portion 6b. The lap belt portion 6b thus tightly restrains the occupant P on the seat 1. This prevents the "submarine phenomenon," in which the body of the occupant P on the seat 1 moves forward while sliding along the seat portion 2 of the seat 1 and through below the seat belt 5.

On the other hand, when the outcome of the determination whether a sensing signal from the contact sensor 24 has been received by the ECU 25 is negative, that is, when the sensing signal from the contact sensor 24 has not been received by the ECU 25, the ECU 25 does not outputs the control signal. Therefore, the inflator 21 is not activated. That is, when receiving no sensing signal from the contact sensor 24, the ECU 25 determines that no occupant is seated on the seat 1 or that an occupant P is seated on the seat 1 without using the seat belt 5, and inhibits the inflation of the airbag 22. In this embodiment, the contact sensor 24 functions as a sensing section (sensing means) that senses whether an occupant P is seated on the seat 1. The contact sensor 24 also functions as a sensing section (sensing means) that senses whether an occupant P is seated on the seat 1 while being restrained to the seat 1 by the seat belt 5.

The present comparative example provides the following advantages.
(1) When the contact sensor 24 senses that the tongue 7 of the seat belt 5 is engaged with the buckle 8, the ECU 25 determines that an occupant P is seated on the seat 1 while using the seat belt 5. In this case, the ECU 25 activates the inflator 21, thereby permitting the airbag 22 to be inflated at the time of a vehicle collision. When the airbag 22 is inflated, the cushion body 12 is pushed upward. As a result, the lumbar region K of the occupant P on the seat 1 is moved upward so as to be pressed against the lap belt portion 6b. The lap belt portion 6b thus tightly restrains the occupant P on the seat 1. This suppresses the submarine phenomenon.
(2) On the other hand, when receiving no sensing signal from the contact sensor 24, the ECU 25 determines that no occupant is seated on the seat 1 or that an occupant P is seated on the seat 1 without using the seat belt 5. In this case, the ECU 25 does not activate the inflator 21, thereby inhibiting the airbag 22 from being inflated at the time of a vehicle collision. Thus, when no occupant is seated on the seat 1 and an article is placed on the seat 1 instead, or when an occupant P is seated on the seat 1 without using the seat belt 5, the inflation of the airbag 22 at the time of a vehicle collision is inhibited.

### Second comparative example

A second comparative example will now be described. Like or the same reference numerals are given to those components that are like or the same as the corresponding components of the first comparative example, and detailed explanations and drawings are omitted or simplified.

In the second comparative example, the airbag apparatus 20 includes a weight sensor 30 instead of the contact sensor 24 as shown in Fig. 6. The weight sensor 30 senses whether the weight on the seat 1 is not less than a predetermined value. The weight sensor 30 is connected to the ECU 25, and sends a sensing signal when sensing that the weight on the seat 1 is equal to or more than the predetermined value. The predetermined value is set to a value that enables the ECU 25 to determine whether the object on the seat is an article or a relatively light weighted occupant, and may be set to 20 kg.

When receiving a collision signal from the collision detection sensor 23, the ECU 25 determines whether the ECU 25 has received a sensing signal from the weight sensor 30. If the outcome of the determination is positive, that is, if a sensing signal from the weight sensor 30 has been received by the ECU 25, the ECU 25 outputs a control signal to activate the inflator 21 to the inflator 21. Contrastingly, if the outcome of the determination is negative, that is, if a sensing signal from the weight sensor 30 has not been received by the ECU 25, the ECU 25 does not output a control signal. That is, the ECU 25 does not activate the inflator 21. In the second embodiment, the weight sensor 30 functions as a sensing section (sensing means) that senses whether an occupant P is seated on the seat 1.

The second comparative example provides the following advantages.
(3) When receiving no sensing signal from the weight sensor 30, the ECU 25 determines that a relatively light weighted occupant P is seated on the seat 1 or an article is placed on the seat 1. In this case, the ECU 25 does not activate the inflator 21, thereby inhibiting the airbag 22 from being inflated at the time of a vehicle collision. Thus, when no occupant is seated on the seat 1 and an article is placed on the seat 1 instead, or when the occupant P seated on the seat 1 is relatively light-weighted, the inflation of the airbag 22 at the time of a vehicle collision is inhibited.
(4) On the other hand, when an article is placed on the seat 1, if the weight of the article is relatively great, the article is unlikely to be tossed upward when the cushion body 12 is pushed upward at a vehicle collision. Also, when an occupant P is seated on the seat 1 without using the seat belt 5, if the weight of the occupant P is relatively great, the occupant P is unlikely to be tossed upward when the cushion body 12 is pushed upward at a vehicle collision. Thus, when the weight on the seat 1 is not less than the predetermined value, the ECU 25 permits the airbag 22 to be inflated at the time of a vehicle collision. When the airbag 22 is inflated, the cushion body 12 is pushed upward. As a result, the lumbar region K of the occupant P on the seat 1 is moved upward so as to be pressed against the lap belt portion 6b. The lap belt portion 6b thus tightly restrains the occupant P on the seat 1. This suppresses the submarine phenomenon.

### Embodiment

An embodiment of the present invention will now be described. Like or the same reference numerals are given to those components that are like or the same as the corresponding components of the first comparative example, and detailed explanations and drawings are omitted or simplified.

In the embodiment, the airbag apparatus 20 includes a weight sensor 30 in addition to the contact sensor 24 as shown in Fig. 7. The weight sensor 30 senses whether the weight on the seat 1 is not less than a predetermined value. The weight sensor 30 is connected to the ECU 25, and sends a sensing signal when sensing that the weight on the seat 1 is equal to or more than the predetermined value. The predetermined value is set to a value that enables the ECU 25 to determine whether the object on the seat is an article or a relatively light weighted occupant, and may be set to 20 kg.

When receiving a collision signal from the collision detection sensor 23, the ECU 25 determines whether the ECU 25 has received a sensing signal from the weight sensor 30. If the outcome of the determination is negative, that is, if a sensing signal from the weight sensor 30 has not been received by the ECU 25, the ECU 25 does not output a control signal to activate the inflator 21. That is, the ECU 25 does not activate the inflator 21.

On the other hand, when the outcome of the determination whether a sensing signal from the weight sensor 30 has been received by the ECU 25 is positive, that is, when the sensing signal from the weight sensor 30 has been received by the ECU 25, the ECU 25 continuously detects whether a sensing signal from the contact sensor 24 has been received by the ECU 25.

If the outcome of the determination is positive, that is, if a sensing signal from the contact sensor 24 has been received by the ECU 25, the ECU 25 outputs the control signal to the inflator 21 so that the airbag 22 is inflated. On the other hand, when the outcome of the determination whether a sensing signal from the contact sensor 24 has been received by the ECU 25 is negative, that is, when the sensing signal from the contact sensor 24 has not been received by the ECU 25, the ECU 25 does not output the control signal. That is, the ECU 25 does not activate the inflator 21. In the third embodiment, the weight sensor 30 functions as a sensing section (sensing means) that senses whether an occupant P is seated on the seat 1. The contact sensor 24 functions as a sensing section (sensing means) that senses whether an occupant P is seated on the seat 1 while being restrained to the seat 1 by the seat belt 5.

In addition to the item (1) of the advantages of the first comparative example, the embodiment provides the following advantage.
(5) At a vehicle collision, the ECU 25 determines whether the weight on the seat 1 is equal to or more than the predetermined value based on whether a sensing signal has been sent from the weight sensor 30. When receiving no sensing signal from the weight sensor 30, the ECU 25 determines that a relatively light weighted occupant P is seated on the seat 1 or an article is placed on the seat 1. In this case, the ECU 25 does not activate the inflator 21, thereby inhibiting the airbag 22 from being inflated at the time of a vehicle collision. Thus, when no occupant is seated on the seat 1 and an article is placed on the seat 1 instead, or when the occupant P seated on the seat 1 is relatively light-weighted, the inflation of the airbag 22 at the time of a vehicle collision is inhibited.

Subsequent to the determination whether the weight on the seat 1 is equal to or more than the predetermined value, the ECU 25 determines whether an occupant P is seated on the seat 1 while using the seat belt 5 based on whether a sensing signal has been sent from the contact sensor 24. Even if a sensing signal has been sent from the weight sensor 30, the ECU 25 does not activate the inflator 21 as long as no sensing signal has been sent from the contact sensor 24, thereby inhibiting the inflation of the airbag 22 at a vehicle collision. Therefore, when an occupant P is seated on the seat 1 without using the seat belt 5, the inflation of the airbag 22 is inhibited at a vehicle collision.

The embodiment may be modified as follows.

In the embodiment, the weight sensor 30 is used as a sensing section (sensing means) for sensing whether an occupant P is seated on the seat 1. However, instead of the weight sensor 30, a pressure sensor that senses whether the load (pressure) acting on the seat 1 is equal to or more than a predetermined value may be used. Alternatively, an infrared sensor that senses the temperature of an object on the seat 1 may be used. To more accurately execute the detection whether an occupant P is seated on the seat 1, at least one of a pressure sensor and an infrared sensor may be used together with the weight sensor 30.

The airbag 22 may be deployed and inflated in such a manner as to expand over the entire region of the seat portion 2 that contacts the thighs and buttocks of the occupant P seated on the seat 1. When the airbag 22 is inflated, the cushion body 12 is substantially entirely pushed upward. In this case, the impact applied to the occupant P on the seat 1 due to the inflation of the airbag 22 is widely dispersed.

Instead of being provided at a front portion of the seat 1, the airbag apparatus 20 may be provided in a rear portion of the seat 1. In this case, the airbag 22 is configured to be deployed forward when inflated.

The collision detection sensor 23 may be replaced by a collision prediction sensor. When prediction a collision of the vehicle, the collision prediction sensor sends a sensing signal to the ECU 25. When receiving the sensing signal from the collision prediction sensor, the ECU 25 determines whether to permit the inflation of the airbag 22.

Whether the occupant P on the seat 1 is restrained to the seat 1 by the seat belt 5 does not need to be sensed by the contact sensor 24. For example, the restraint of the occupant P may be sensed by a sensor that senses whether the webbing 6 is drawn out of the seat belt retractor.

An occupant protection apparatus (20) includes an airbag (22) provided at a seat portion (2) of a vehicle seat (1). The airbag (22) is inflatable in such manner as to push up at least a part of a cushion body (12) of the seat portion (2). At the time of collision of the vehicle, an ECU (25) permits inflation of the airbag (22) if a sensor (24) senses that an occupant (P) is seated on the seat (1), and inhibits inflation of the airbag (22) if the sensor (24) senses that no occupant is seated on the seat (1). Therefore, when no occupant is seated on the seat (1), inflation of the airbag (22) is inhibited at a vehicle collision.

## Claims

1. An apparatus for protecting an occupant (P) of a vehicle, the vehicle having a seat (1), wherein the seat (1) includes a seat portion (2) having a cushion body (12), the apparatus includes an airbag (22) provided at the seat portion (2), the airbag (22) being inflatable in such manner as to push up at least a part of the.cushion body (12) of the seat portion (2), the apparatus
**characterized by:**
first sensing means (30) that senses whether an occupant (P) is seated on the seat (1); and
restraining means (5) that restrains an occupant (P) seated on the seat (1) to the seat (1);
second sensing means (24) that senses whether the restraining means (5) is in operation;
control means (25) that controls whether to inflate the airbag (22), wherein, when a collision of the vehicle has occurred or is predicted, the control means (25) permits inflation of the airbag (22) if the first sensing means (30) senses that an occupant (P) is seated on the seat (1) and the second sensing means (24) senses that the restraining means (5) is in operation, and inhibits inflation of the airbag (22) if the first sensing means (30) senses that no occupant is seated on the seat (1) or if the second sensing means (24) senses that the restraining means (5) is not in operation.

2. The apparatus according to claim 1,
**characterized in that**
the first sensing means (30) senses whether an occupant (P) is seated on the seat (1) based on whether a weight on the seat (1) is equal to or more than a predetermined value.

3. The apparatus according to claim 1 or 2,
**characterized in that**
the restraining means (5) is a seat belt having a tongue (7) and a buckle (8), and wherein the second sensing means (24) senses whether the restraining means (5) is in operation based on whether the tongue (7) is engaged with the buckle (8).

4. A method for protecting an occupant (P) of a vehicle, the vehicle having a seat (1), wherein the seat (1) includes a seat portion (2) having a cushion body (12), an airbag (22) being provided at the seat portion (2), wherein the airbag (22) is inflatable in such manner as to push up at least a part of the cushion body (12) of the seat portion (2), the method
**characterized by:**
sensing, when a collision of the vehicle has occurred or is predicted, whether an occupant (P) is seated on the seat (1);
sensing, when a collision of the vehicle has occurred or is predicted, whether restraining means (5) that restrains an occupant (P) seated on the seat (1) to the seat (1) is in operation; and
selectively permitting and inhibiting inflation of the airbag (22), wherein, when it is sensed that an occupant (P) is seated on the seat (1) and that the restraining means (5) is in operation, inflation of the airbag (22) is permitted, and wherein, when it is sensed that no occupant is seated on the seat (1) or when it is sensed that the restraining means (5) is not in operation, inflation of the airbag (22) is inhibited.

5. The method according to claim 4,
**characterized in that**
whether an occupant (P) is seated on the seat (1) is sensed based on whether a weight on the seat (1) is equal to or more than a predetermined value.

6. The method according to claim 4 or 5,
**characterized in that**
the restraining means (5) is a seat belt having a tongue (7) and a buckle (8), and wherein whether the restraining means (5) is in operation is sensed based on whether the tongue (7) is engaged with the buckle (8).

## Patentansprüche

1. Gerät zum Schutz eines Insassen (P) eines Fahrzeugs, wobei das Fahrzeug einen Sitz (1) hat, wobei der Sitz (1) einen Sitzabschnitt (2) mit einem Polsterkörper (12) aufweist, wobei das Gerät einen Airbag (22) aufweist, der an dem Sitzabschnitt (2) vorgesehen ist, wobei der Airbag (22) in solch einer Weise aufblasbar ist, dass er zumindest einen Teil des Polsterkörpers (12) des Sitzabschnitts (2) hochdrückt, wobei das Gerät
**gekennzeichnet ist durch**
eine erste Erfassungseinrichtung (30), die erfasst, ob ein Insasse (P) auf dem Sitz (1) sitzt; und
eine Rückhalteeinrichtung (5), die einen Insassen (P), der auf dem Sitz (1) sitzt, auf dem Sitz (1) zurückhält;
eine zweite Erfassungseinrichtung (24), die erfasst, ob sich die Rückhalteeinrichtung (5) im Betrieb befindet;
eine Steuereinrichtung (25), die steuert, ob der Airbag (22) aufzublasen ist, wobei dann, wenn eine Kollision des Fahrzeugs eingetreten ist oder vorhergesagt wird, die Steuereinrichtung (25) ein Aufblasen des Airbags (22) zulässt, wenn die erste Erfassungseinrichtung (30) erfasst, dass ein Insasse (P) auf dem Sitz (1) sitzt, und die zweite Erfassungseinrichtung (24) erfasst, dass sich die Rückhalteeinrichtung (5) im Betreib befindet, und ein Aufblasen des Airbags (22) verhindert, wenn die erste Erfassungseinrichtung (30) erfasst, dass kein Insasse auf dem Sitz (1) sitzt, oder wenn die zweite Erfassungseinrichtung (24) erfasst, dass sich die Rückhalteeinrichtung (5) nicht im Betrieb befindet.

2. Gerät gemäß Anspruch 1,
**dadurch gekennzeichnet, dass**
basierend darauf, ob ein Gewicht des Sitzes (1) gleich wie oder höher als ein vorbestimmter Wert ist, die erste Erfassungseinrichtung (30) erfasst, ob ein Insasse (P) auf dem Sitz (1) sitzt.

3. Gerät gemäß Anspruch 1 oder 2,
**dadurch gekennzeichnet, dass**
die Rückhalteeinrichtung (5) ein Sicherheitsgurt mit einer Einstecklasche (7) und einer Gurtschnalle (8) ist, und wobei die zweite Erfassungseinrichtung (24) basierend darauf, ob sich die Einstecklasche (7) im Eingriff mit der Gurtschnalle (8) befindet, erfasst, ob sich die Rückhalteeinrichtung (5) im Betrieb befindet.

4. Verfahren zum Schutz eines Insassen (P) eines Fahrzeugs, wobei das Fahrzeug einen Sitz (1) hat, wobei der Sitz (1) einen Sitzabschnitt (2) mit einem Polsterkörper (12) aufweist, wobei ein Airbag (22) an dem Sitzabschnitt (2) vorgesehen ist, wobei der Airbag (22) in solch einer Weise aufblasbar ist, dass er zumindest einen Teil des Polsterkörpers (12) des Sitzabschnitts (2) hochdrückt, wobei das Verfahren
**gekennzeichnet ist durch**
Erfassen, wenn einen Kollision des Fahrzeugs eingetreten ist oder vorhergesagt wird, ob ein Insasse (P) auf dem Sitz (1) sitzt;
Erfassen, wenn einen Kollision des Fahrzeugs eingetreten ist oder vorhergesagt wird, ob sich eine Rückhalteeinrichtung (5), die einen auf dem Sitz (1) sitzenden Insassen (P) an dem Sitz (1) zurückhält, im Betrieb befindet; und
wahlweises Zulassen und Verhindern eines Aufblasens des Airbags (22), wobei dann, wenn erfasst wird, dass ein Insasse (P) auf dem Sitz (1) sitzt, und dass sich die Rückhalteeinrichtung (5) im Betrieb befindet, ein Aufblasen des Airbags (22) zugelassen wird, und wobei dann, wenn erfasst wird, dass kein Insasse auf dem Sitz (1) sitzt, oder wenn erfasst wird, dass sich die Rückhalteeinrichtung (5) nicht im Betrieb befindet, ein Aufblasen des Airbags (22) verhindert wird.

5. Verfahren gemäß Anspruch 4,
**dadurch gekennzeichnet, dass**
basierend darauf, ob ein Gewicht auf dem Sitz (1) gleich wie oder größer als ein vorbestimmter Wert ist, erfasst wird, ob ein Insasse (P) auf dem Sitz (1) sitzt.

6. Verfahren gemäß Anspruch 4 oder 5,
**dadurch gekennzeichnet, dass**
die Rückhalteeinrichtung (5) ein Sicherheitsgurt mit einer Einstecklasche (7) und einer Gurtschnalle (8) ist, und wobei basierend darauf, ob sich die Einstecklasche (7) im Eingriff mit der Gurtschnalle (8) befindet, erfasst wird, ob sich die Rückhalteeinrichtung (5) im Betrieb befindet.

## Revendications

1. Appareil de protection d'un occupant (P) d'un véhicule, le véhicule ayant un siège (1), où le siège (1) comporte une partie de siège (2) ayant un corps de coussin (12), l'appareil comprend un coussin de sécurité gonflable (22) pourvu à la partie de siège (2), le coussin de sécurité gonflable (22) pouvant se déployer d'une manière telle à soulever au moins une partie du corps de coussin (12) de la partie de siège (2), l'appareil
**caractérisé par**:
un premier moyen de détection (30) qui détecte le fait qu'un occupant (P) est assis sur le siège (1); et
un moyen de rétention (5) qui retient un occupant (P) assis sur le siège (1) au siège (1);
un deuxième moyen de détection (24) qui détecte le fait que le moyen de rétention (5) est en action;
un moyen de commande (25) qui commande s'il faut déployer le coussin de sécurité gonflable (22), dans lequel, lorsqu'une collision du véhicule s'est produite ou est prévue, le moyen de commande (25) permet un déploiement du coussin de sécurité gonflable (22) si le premier moyen de détection (30) détecte qu'un occupant (P) est assis sur le siège (1) et le deuxième moyen de détection (24) détecte que le moyen de rétention (5) est en action, et empêche un déploiement du coussin de sécurité gonflable (22) si le premier moyen de détection (30) détecte qu'aucun occupant n'est assis sur le siège (1) ou si le deuxième moyen de détection (24) détecte que le moyen de rétention (5) n'est pas en action.

2. Appareil selon la revendication 1,
**caractérisé en ce que**
le premier moyen de détection (30) détecte si un occupant (P) est assis sur le siège (1) sur la base du fait qu'un poids sur le siège (1) est supérieur ou égal à une valeur prédéterminée.

3. Appareil selon la revendication 1 ou 2,
**caractérisé en ce que**
le moyen de rétention (5) est une ceinture de sécurité ayant une languette (7) et une boucle (8), et où le deuxième moyen de détection (24) détecte si le moyen de rétention (5) est en action sur la base du fait que la languette (7) est engagée avec la boucle (8).

4. Procédé de protection d'un occupant (P) d'un véhicule, le véhicule ayant un siège (1), dans lequel le siège (1) comprend une partie de siège (2) ayant un corps de coussin (12), un coussin de sécurité gonflable (22) qui est pourvu à la partie de siège (2), où le coussin de sécurité gonflable (22) peut se déployer d'une manière telle à soulever au moins une partie du corps de coussin (12) de la partie de siège (2), le procédé
**caractérisé par** le fait de:
détecter, lorsqu'une collision du véhicule s'est produite ou est prévue, si un occupant (P) est assis sur le siège (1);
détecter, lorsqu'une collision du véhicule s'est produite ou est prévue, si un moyen de rétention (5) qui retient un occupant (P) assis sur le siège (1) au siège (1) est en action; et
permettre et empêcher de manière sélective un déploiement du coussin de sécurité gonflable (22), où, lorsqu'on détecte qu'un occupant (P) est assis sur le siège (1) et que le moyen de rétention (5) est en action, l'on permet un déploiement du coussin de sécurité gonflable (22), et où, lorsqu'on détecte qu'aucun occupant n'est assis sur le siège (1) ou lorsqu'on détecte que le moyen de rétention (5) n'est pas en action, l'on empêche un déploiement du coussin de sécurité gonflable (22).

5. Procédé selon la revendication 4,
**caractérisé en ce que**
le fait qu'un occupant (P) est assis sur le siège (1) est détecté sur la base du fait qu'un poids sur le siège (1) est supérieur ou égal à une valeur prédéterminée.

6. Procédé selon la revendication 4 ou 5,
**caractérisé en ce que**
le moyen de rétention (5) est une ceinture de sécurité ayant une languette (7) et une boucle (8), et où le fait que le moyen de rétention (5) est en action est détecté sur la base du fait que la languette (7) est engagée avec la boucle (8).
